# EUROPEAN PATENT SPECIFICATION

(11) **EP 3 705 077 B1**
(45) Date of publication and mention of the grant of the patent: **22.09.2021**
(21) Application number: 20161017.7
(22) Date of filing: 04.03.2020
(51) Int. Cl.: A61C 7/08, B33Y 10/00, B33Y 30/00, G03F 7/20, G03F 7/028

(54) **METHOD OF MAKING A 3D PRINTED DENTAL ALIGNER OR MOUTHGUARD**
VERFAHREN ZUR HERSTELLUNG EINES 3D-GEDRUCKTEN ZAHNÄRZTLICHEN AUSRICHTERS ODER MUNDSCHUTZES
PROCÉDÉ DE FABRICATION D'UN ALIGNEUR DENTAIRE OU D'UN PROTÈGE-DENTS IMPRIMÉ EN 3D

(30) Priority: 04.03.2019 GB 201902878
(43) Date of publication of application: 09.09.2020
(73) Proprietor: PhotoCentriC Limited, Peterborough Cambridgeshire PE1 5YW (GB)
(72) Inventor: HOLT, Paul, Peterborough, PE1 5YW (GB); BARLOW, Ed, Peterborough, PE1 5YW (GB); KAMEL, Sarah, Peterborough, PE1 5YW (GB); ANGELINI, Roberto, Peterborough, PE1 5YW (GB)
(74) Representative: HGF

(56) References cited:
- WO-A1-2017/051182
- WO-A1-2018/091891
- US-A1- 2018 126 630
- US-A1- 2018 141 268

## Description

### TECHNICAL FIELD

This invention relates to the field of 3D printing used to make dental aligners or mouthguards for the purpose of straightening or protecting teeth. The aligner is a hard, clear polymer layer that encases the upper, lower or both sets of teeth to exert correcting forces on the teeth to realign their position, optionally these aligners can also incorporate a wire for more rapid treatment. The mouthguard is a hard polymer layer that encases the upper sets of teeth and gums to protect them.

### BRIEF SUMMARY OF THE INVENTION

This invention describes a method of directly 3D printing the aligners or mouthguards from liquid photopolymer rather than as it is currently manufactured by thermoforming plastic over a custom model and then trimming it to the desired size.

### BACKGROUND

Traditionally, appliances such as braces were applied to a patient's teeth by a dentist to exert continual force on the teeth and gradually push them towards their intended positions. Over time and a series of visits, the dentist would make adjustments to the braces so they moved the teeth toward their final, more aesthetically pleasing position. More recently, a clear polymer alternative has become available in thermoformed aligners typically made from polyurethane. Examples of these are the product Invisalign® manufactured by Align Technology of San Jose California. Here a treatment plan is created from one impression taken from the patient's teeth. The process then involves designing and/or fabricating multiple, and sometimes all, of the aligners to be worn by the patient before the aligners are administered to the patient which will be used to reposition the teeth. Often, designing and planning a customised treatment for a patient utilises computer-based 3D planning software. The design of the aligners relies on computer modelling of the patient's teeth in a series of planned successive tooth movements and the individual aligners are designed to be worn over the teeth such that each aligner exerts force on the teeth and elastically repositions the teeth in a set of planned movements. The manufacturing process of creating these aligners is typically to take the impression of the patient's teeth either by way of an intra-oral scanner or by a physical bite impression on a mouldable material. A copy of the patient's teeth is loaded into a software program which then creates a set of upper and lower models moving the teeth in small increments every time, typically no more than 0.3mm in a single step, towards the optimised position. These designs are typically 3D printed to create models and a thin sheet of thermoplastic is pulled over the models at elevated temperature to provide a copy of the external surface of the models, which is the aligner. The edges of the thermoformed models are then trimmed to match the line of the gingiva.

Mouthguards are traditionally used as protective devices covering the upper teeth in the mouth. They cover and protect both teeth and gums, preventing injuries caused by the upper and lower teeth making violent contact. These types of injuries are mostly caused during contact sports, causing a fracture or displacement of teeth through an impact to the individual's lower face or mouth. Traditional methods for the fabrication of mouthguards use either a 'one size fits all' approach using polyurethane, however the resulting mouthguards aren't made to fit a specific individual. More recently, customer-specific approaches to the fabrication of mouthguards have been created. These include a mouth-adapted boil and bite approach, in which a preformed thermoplastic material is adapted to the individual's teeth by heating and shaping. Also, the concept of custom-made mouthguards has been introduced. In this case, a 3D impression of the patient's teeth is taken and the mouthguard is vacuum formed over this impression. Said impression may be also fabricated by taking a 3D intraoral scan, converting it into an stl file and then 3D printing it to create the model.

There is a need for these aligner and mouthguard orthodontic treatments to be manufactured faster and the ability to directly print the aligner or mouthguard makes the manufacturing process much quicker as well as simplifying it and potentially improving its performance by optimising its thickness. It is an object of this invention to provide a method of direct printing the aligner or mouthguard using just a 3D printer and a post processing unit, thus enabling it to take place with lower cost equipment, potentially in the dentist's surgery. It is a further advantage of this invention that as the aligner or mouthguard is printed rather than thermoformed its properties can be tailored to exactly the physical requirements of the orthodontic alignment device, rather than it primarily being thermoformable. Furthermore, with direct printing, the device can have a varying wall thickness according to its position in the mouth rather than being created from a uniform thickness that has been stretched over the raised profiles in the model. This enables the device to deliver varying forces and also be more comfortable to wear.

Prior art WO2017051182 relates to formulations for use in 3-D printing using radiation from visual display screens. The formulations comprise titanocene photoinitators and co-initiators. The invention also relates to methods of forming 3-D objects using said formulations

### SUMMARY OF THE DISCLOSURE

The invention is as defined in the appended claims.

The present invention provides a method of making a dental appliance for repositioning or protecting a patient's teeth. The dental appliance can include a removable orthodontic tooth positioning appliance having teeth receiving cavities shaped to directly receive at least some of the patient's teeth and apply a resilient positioning force to the patient's teeth, the appliance comprising a hard polymer layer that is 3D printed from liquid photopolymer. The photopolymer is hardened with light emitted from a visual display screen. The resultant aligner or mouthguard is washed, and dried and optionally coated in a clear light sensitive, heat-curable or two-component coating. This coating process can take place prior or after post exposure. It can be carried out by dip coating or by spray coating or any other similar process.

In a first aspect of this disclosure the photopolymer described provides the following properties; a high level of transparency (for the aligners only), the necessary physical tensile strength and elasticity while at the same time passing the necessary skin sensitisation and cytotoxicity tests. It can be of any type that will harden free radically with light in the intensity and wavelength of the light source. It can be polyurethane, polycarbonate, epoxy based or other form of chemistry.

In a second aspect of the disclosure is provided a method for creating a 3D object, the method comprising the formation of more than two layers of a cured photopolymer by exposing a liquid photopolymer resin selectively to light emitted from a visual display screen. The visual display screen is preferably an LCD screen and desirably a monochrome screen. The light is preferably of a wavelength that enables clear parts to be made effectively, most commonly this is near-UV visible or UV radiation emitted through the blue, green or red subpixels or the whole pixels in a monochrome screen. The aligner is then drained and washed in a suitable solvent. After cleaning, a post processing procedure involving blanket illumination of light, under water exposure or optionally heat is necessary to fully harden the aligner and leave it dry to touch.

In a third aspect of this disclosure is provided a method of using multiple LCD screens arranged in an array so that in a single process a large number of aligners can be manufactured simultaneously.

In a fourth aspect of this disclosure is provided a method of encapsulating the resultant printed aligner in a bio-compatible clear top coating to seal the polymer. The coating providing two benefits; creating a uniform shiny or matte surface covering up build layer lines and sealing the polymer inside from any potential leaching effect of solvent emersion. This process can take place before the post exposure process; with the advantage that the open un-crosslinked chains at the surface are receptive to bonding to the coating, or after the post exposure process with the advantage that the supports have been removed, or it can even take place twice once to encapsulate the polymer while the aligner is still on its build supports and then again after the supports have been removed to fully encapsulate the aligner.

In a fifth aspect of the disclosure is provide a method of enabling the processes of exposure, washing, post exposure and spraying and unloading to take place in a continuously operating machine.

In a sixth aspect of the disclosure is provided a method for 3D printing a plurality of dental aligners or a mouthguards from liquid photopolymer, the method comprising sequentially exposing liquid photopolymer to light emitted by a visual display screen or a plurality of visual display screens, thereby forming layers of a plurality of cured polymer aligners or mouthguards simultaneously, wherein the photopolymer contains a visible light or UV light photoinitiator.

The liquid photopolymer may be exposed to light from a plurality of visual display screens. Said screens may be arranged in the same horizontal plane. The liquid photopolymer may be exposed to light from a single of visual display screen.

It may be that the plurality of dental aligners are a set intended for use with the same patient, each aligner being for use at a different stage of their treatment. Thus, the plurality aligners may all differ in shape.

The disclosure may also provide a liquid photopolymer formulation. The formulation is suitable for making dental aligners or mouthguards according to the methods described herein. The formulation may comprise any of the components described below.

### DETAILED DESCRIPTION

This invention describes a method for 3D printing a dental aligner or a mouthguard, the method comprising forming more than two layers of a cured polymer by exposing liquid photopolymer to light emitted by a visual display screen, wherein the photopolymer contains a visible light or UV light photoinitiator. The invention also describes a method for 3D printing a plurality of dental aligners or a mouthguards from liquid photopolymer, the method comprising sequentially exposing liquid photopolymer to light emitted by a visual display screen or a plurality of visual display screens, thereby forming layers of a plurality of cured polymer aligners or mouthguards simultaneously, wherein the photopolymer contains a visible light or UV light photoinitiator.

In this process the aligner or mouthguard may be coated with a biocompatible reactive material. The term biocompatible refers to substances, which aren't harmful or toxic to living tissue and the term reactive refers to a material that undergoes a chemical reaction when subjected to mixing, solvent evaporation, heat or light. The application of heat or light may be appropriate to complete the curing of this coating. The liquid photopolymer may comprise: at least one monomeric or oligomeric chemical species comprising at least one carbon-carbon double bond that is polymerisable by free radical polymerisation being present at a total amount of 10-98 wt %; at least one photoinitiator that absorbs UV, or blue light in the region between 350 nm and 460 nm present at a total amount of 0.1-10 wt %.

The aligner or mouthguard in this invention may be created directly, by being printed in a 3D printer. 3D printing, also known as rapid prototyping or additive manufacturing, is a method of forming 3D objects by building up sequential layers, each layer defined by a digital representation. The digital representations may be formed by scanning a subject's mouth or teeth in three-dimensions or may be formed by digitally sectioning a three-dimensional computer-aided design (CAD) image into layers, typically of equal thicknesses. In stereolithography apparatus printing (SLA), the printer builds 3D objects from successive layers of selectively polymerised liquid photosensitive polymer (resin), also referred to as photopolymer. The liquid photopolymer is polymerised (hardened) by electromagnetic radiation exposure of an appropriate wavelength, e.g. near visible or ultraviolet light emitted through a visual display screen. Aligners and mouthguards in this invention can be fabricated using the 3D printers and methods described in 'Method for Making an Object' (WO 2016/181149) to Holt and 'Methods for making an object and formulations for use in said methods' (WO2017/051182 A1) to Holt.

In this invention we describe a method for 3D printing a dental aligner or a mouthguard, the method comprising forming more than two layers of a cured polymer by exposing liquid photopolymer to light emitted by a visual display screen, wherein the photopolymer contains a visible light, or UV light photoinitiator.

This method describes a process, wherein, after the 3D printing process, the aligner or mouthguard may be coated with a biocompatible reactive material. The term biocompatible refers to substances which aren't harmful or toxic to living tissue and the term reactive refers to a material that undergoes a chemical reaction when mixed, or subjected to an external stimulus such as heat or light.

To form a 3D printed object by stereolithographic 3D printing, for example, by the method of the present invention, selective illumination by electromagnetic radiation is provided from an imaging source to form each layer, with the first layer being formed on a build platform., The separation distance between the build platform and imaging source may be increased by the thickness of a layer with the next layer of selective polymerisation being formed on the preceding layer. The process of selective exposure and separation is repeated until the complete 3D printed object has been built layer by layer. Traditionally photopolymer was selectively hardened by light emitted from a laser beam or by focusing the light from a digital light processing (DLP) projector emitted through its digital mirror device. This could be irradiated onto either the upper or lower layer of resin in a vat.

This invention relates to the field of 3D printing where the image source is a visual display screen, commonly an LCD screen. LCD screens have recently become widely used by manufacturers who have incorporated the screens as the digital mask to deliver the custom photopolymerisation. LCD screens are particularly attractive as an image creation device in 3D printers because they are mass manufactured consumer items and are therefore available at very low cost. Furthermore, they generate very high-resolution images driven by the demand to view higher and higher image quality images on them. They also expose an entire layer of the vat simultaneously, with very even light distribution without any requirement to refocus the light through a lens. LCD screens also allow for a plurality of images to be displayed on the same screen. They are available in a wide variety of formats from the very small screens used in near-eye headsets, through mobiles, tablets, monitors up to TV screens. They are also simpler to incorporate into 3D printers than the competitive technologies. In the case of a laser 3D printer, complex electronics and galvanometers are required and correspondingly in the case of a DLP printer a lens is required to refocus the widening light beam back into a smaller area. In contrast, visual display screen device-based 3D printers are effectively a digitally controllable light mask that defines the area of the build platform with an optionally modified light generation source, an electronic control board, a linear drive and a resin containment vat.

In the process of making an object by SLA printing, e.g. the method of the present invention; the object is created by sequential exposure of liquid photopolymer to light. The object may be created by sequential exposure of liquid photopolymer to light in layers., The sequential exposure of liquid photopolymer to light may be interspersed by motion of the cured or partially sure object perpendicularly away from the light generation surface. The finished object is then elevated from the photopolymer vat. Liquid photopolymer or resin attached to the surface of the object may be allowed to drain back into the vat., The print platform to which the object has been built upon is then removed from the printer, typically by hand, and transferred to a wash station. The object may be with a solvent solution to remove any remaining liquid photopolymer or resin attached to the object. The object is then rinsed and transferred to a separate post exposure station where it is irradiated with uniform light of a similar wavelength to that which created the object in the first place. This process may take place under water. The object is then rinsed again and dried ready for use., It may also be post exposed with heat. Printers are typically orientated such that the photopolymer is contained in a vat that is above the visual display screen, either in contact with it or separated by a gap from it. In this case the platform moves from the bottom upwards as it prints- known as bottom-up or reverse SLA. In the case of this bottom up orientation the vat must have a light transmitting lower layer which can be a film which provides the properties of being very low surface energy to reduce sticking and have high light transmittance with low haze to reduce refraction. Alternatively, it is possible to orientate the vat below the screen such that the platform starts at the top and moves downwards through the process of the print, known as top-down or conventional SLA. In this case, as with bottom-up, the screen can either be in contact with the resin or have a separation gap filled with a release medium such as air. In this description the words aligner and mouthguard are used interchangeably.

Photopolymer is hardened with light from a visual display screen or emissive pixel array which may be of a number of types; Liquid Crystal Display (LCD), Light emitting Diode (LED), Electronic paper (E Ink), Electroluminescent display (ELD), Plasma Display Panel (PDP) or Organic Light-emitting Diode Display (OLED). This list is not limiting in its scope in terms of the invention and indeed any device which emits digitally controllable light can be used in this invention., The preferred choice of visual display screen however is LCD in format. For simplicity we will use the term LCD screen to refer to the visual display screen used in a nonlimiting manner afterwards.

An LCD typically consists of an array of pixels. Each pixel consists of a layer of liquid crystal molecules aligned between two transparent electrodes and two polarising filters (parallel and perpendicular), the axes of transmission of which are, in most of the cases, perpendicular to each other. Before an electric field is applied, the orientation of the liquid crystal molecules is commonly twisted, the surface alignment directions at the two electrodes are perpendicular to each other and so the molecules arrange themselves in a helical structure. By controlling the voltage applied across the liquid crystal layer in each pixel, light can be allowed to pass through in varying amounts thus creating different levels of light transmission.

It may be that the visual display screen has 250 pixels per inch or greater. It may be that the visual display screen has 500 pixels per inch or greater. It may be that the visual display screen has a ratio of its contrast ratio to its luminescence that is above 1.0. It may be that the LCD screen is a colour screen, typically with pixels composed of blue, green and red sub pixels. Most desirably the LCD screen is composed of sub pixels with no colour filter on them, so they allow all of the light delivered by the back light through when they un-twist.

It may be that the visual display screen has a resolution of 3840 x 2160 pixels, 4096 x 2160 pixels or 7680 × 4320. It may be that the visual display screen has 4K or 8K resolution.

It may be that the visual display screen emits light with a wavelength of between 350 nm to 460 nm. It may be that the visual display screen emits light with a wavelength of between 350 nm to 410 nm. It may be that the visual display screen emits light with a wavelength within the range that the photoinitiator in the photopolymer absorbs light.

The length of time that the screen illuminates the image in the present invention is determined by two factors; the rate of curing of the photopolymer and the intensity of light being emitted from the screen thus curing it. It is therefore desirable to reduce the exposure time by increasing the intensity of the light transferred through the array. In some cases, this type of visual display screen 3D printer utilises the screen as it was intended. However, in most cases the 3D printer manufacturer removes the backlight and rear panel and lights it directly from behind the array. In the case of LCD screen assemblies, the existing LED backlight generating visible light from 400nm to 700nm may be replaced with LEDs directly behind the array emitting light that is as collimated as possible and can be of a chosen wavelength. This in effect uses the LCD array as individually controllable masks that either untwist and allow the light through or remain twisted to prevent it passing. The screens can be monochrome or colour and composed of sets of blue, green and red subpixels or other colours. The wavelengths can be visible or predominantly long wavelength UVA overlapping into the blue part of the visible spectrum. The intensity can be much brighter than would be intended for human viewing where typically 350-500 nits (candela/m²) is used for normally lit environments and 800-1000 nits is used for sunlit ones., in practice there is no limit to light intensity emitted from the array, it being dependent upon the power of the lighting array behind it, the loss in contrast ratio as the intensity is increased and the maximum tolerable level of heat or UV for the screen or the resin. LCD screens are reliable and if lit at the correct wavelength, intensity and in the absence of significant heat generation, are very long lasting, generating reliable images for over 30,000 hours, far longer than lasers or DLPs. The screens discussed in this paragraph may be used in the present invetion.

The 3D printers used in this invention typically have linear rails. The linear rails may provide accurate, repeatable motion in the z-axis of 100 microns, preferably 50 microns and desirably 25 microns. There is no particular requirement for the construction or number of these drives. It is possible to have one positioned centrally or two drives at opposite sides of the build platform, nor is there any specific requirement for the construction of the drive. It can be moved by slider, lead screw, belt or other method. A suitable drive unit would be the Nema 17 stepper motor with 8mm lead screw and a 1mm pitch attached at right angles to the support plate that houses the visual display screen.

Because aligners need to be made in multiple sets of upper and lower retainers and there is a growing number of people requiring them the quantity needed to be manufactured is very large, so the printers need to have a large area of LCD available to expose polymer. This can be achieved with a large screen such as 24" monitor screen or a 40" TV. However, a plurality of screens may be used. This may achieve a resolution that is suitable to make an accurately fitting aligner. The aligner may be below 200 microns variation to the CAD design, or more desirably below 100 microns to the CAD design., This may be achieved by using an arrangement of multiple screens. The screens may be tablet or mobile phone screens. The screens may deliver sub 100 micron accuracy to the parts, in volume.

As LCD screens have a border without pixels on them at each edge and have electronic ribbon connectors on at least one edge it is not possible to join them close enough together without leaving an obvious edge from which no light can be emitted. This invention allows a sufficient gap around each screen and arranges for multiple high definition screens on the same screen support plate to be used. As aligners are all of the same maximum size, that of the largest set of teeth, the number of aligners made at a time can be fixed around this size. The aligners can be arranged digitally such that they are printed flat on the bed, typically with supports around the lower surface that will be in contact with the gingiva. They can be arranged so that they are printed vertically with supports on the two ends. They can be printed at an angle, but this typically requires supports along both open edges and is therefore less desirable.

The 3D printer can be configured to have multiple screens controlled separately by individual computers or more desirably a single computer handling multiple data files sent to each of the screens. With this arrangement it is now possible to make numerous extremely high-resolution aligners at one time in the same printer. This provides significant advantages as without it, users would need a farm of printers with numerous small, high-resolution printers being separately loaded with images, individually homed to start them, filled separately with the same resin and the platforms being individually removed and cleaned. Labour cost is a significant and problematic issue with additive manufacture. Now, with this invention, one large printer can contain any geometrically convenient number of screens to meet the production needs of the company and thus significantly reduce the labour required as the process of starting the print, washing it and post exposing it are effectively the same, thus with multiple screens being used in this invention, the labour in these processes can be divided by the number of screens used. Furthermore, the labour involved in finishing it is also reduced as they are quicker to remove from any build supports used at one time rather than by handling multiple platforms.

This process can be further automated to remove labour by combining the exposure, wash, post exposure, spray/coat, load and unload processes into a linked mechanical sequence so that each of these processes can be performed simultaneously. The process can be configured in different orientations; a linear track with the functional stations orientated down one side, a rotational format with the stations equally spaced in a circular pattern either rotating vertically or horizontally, or a combination of these orientations where the platforms return to the position they started the process in. The four principal processes of exposing, washing, post exposing and spraying/coating all take a considerable period of time and combining them increases the production efficiency of the machine, the final section of part removal, platform loading and support removal (if necessary) can be take place during the inline process or separate from it without reducing the production output. It should be appreciated that it is not limited to these configurations and other arrangements and combinations of these orientations of the stations are possible within the scope of this application.

The photopolymer described in this invention may provide the following properties; a high level of transparency while remaining colourless for the aligners, mouthguards can be coloured, the necessary physical tensile strength and elasticity while at the same time passing the necessary skin sensitisation and cytotoxicity tests. The photopolymer may be of any type that will harden free radically with light in the intensity and wavelength of the light source. It can be polyurethane, polycarbonate, epoxy based or other form of chemistry. The aligner is then drained and washed in any suitable solvent. After cleaning, a post processing procedure involving blanket illumination of light is necessary to fully harden the aligner and leave it dry to touch. This post processing procedure may be carried out under water exposure or under heat exposure. The aligner may be further treated with a light sensitive, heat sensitive or a two-component transparent coating. Said coating has to be biocompatible and clear and can be applied either by spraying or dipping the 3D printed aligner into the coating. The use of biocompatible coatings is a method to encapsulate the photopolymer and prevent components within the photopolymer formulation from leaching, or water or solvents in the mouth from leaching into the aligner and creating swelling. Thus, the use of a coating enables the process to deliver a uniform surface finish, while sealing the photopolymer from leaching effects. Said coating process may take place either before, or after the post-exposure of the 3D printed aligner. Said photopolymer formulation for forming highly transparent 3D objects via a radical photopolymerisation mechanism may comprise: at least one monomeric or oligomeric chemical species comprising at least one carbon-carbon double bond that is polymerisable by free radical polymerisation. The oligomeric or monomeric species may be present in a total amount of 10-95 wt% together with at least one photoinitiator, that absorbs UV or blue light in the region between 350 - 470 nm, the photoinitiator being present at 0.1-10 wt%. Optionally, the photopolymer resin can contain a co-initiator, light absorber, pigment or dye. It may be that the photopolymer formulation comprises at least one monomeric species, comprising at least one carbon-carbon double bond that is polymerisable by free radical polymerisation and at least one oligomeric species comprising at least one carbon-carbon double bond that is polymerizable by free radical polymerization. The monomeric species is present in a total amount of 10-95 wt%. It may be that the total amount of oligomeric species with at least one carbon-carbon double bond is between 20-85 wt%. It may be that the total amount of oligomeric species which is polymerisable by free radical polymerisation is between 45-80 wt%. It may be that the total amount of monomeric species which is polymerisable via radical polymerisation is between 30-65 wt%. It may be that the total amount of monomeric species comprising at least one carbon-carbon double bond is between 35-45 wt%. It may be that the photopolymer formulation comprises at least one aliphatic urethane acrylate monomer, it may be that the aliphatic urethane monomer comprises a single carbon-carbon double that can be polymerised by radical polymerisation. Said aliphatic urethane monomer may comprise an acrylate or methacrylate group. Said aliphatic urethane monomer may be present in 10-95 wt%. It may be that the oligomeric species is an aliphatic urethane acrylate oligomer, which contains one, two or three acrylate groups, depending on the desired properties of the cured part. It may be that the photopolymer formulation contains an epoxy acrylate monomer with at least one carbon-carbon double bond that can be polymerised via a radical polymerisation mechanism. It may be that the oligomeric species is an epoxy acrylate oligomer, which contains one, two or three acrylate groups, depending on the desired properties of the cured part. It may be that the urethane acrylate monomer is used in combination with the epoxy acrylate oligomer, comprising multiple carbon-carbon bonds. Said monomers and oligomers may be selected from a list of biocompatible materials, in order to ensure the biocompatibility of the final formulation such as: 2-Hydroxyethyl methacrylate (HEMA), diurethane dimethacrylate (bis(2-methacryloxethyl) N, N'-1,9-nonylene biscarbamate), triethylene glycol dimethacrylate (TEGDMA), urethane dimethacrylate (UDMA, dental grade), 2-(dimethylamino) ethyl methacrylate, isbornyl methacrylate, methyl methacrylate, 3-(trimethoxysilyl) propyl methacrylate, (trimethylsiliyl) methacrylate, 3-(tris(trimethylsiloxy)silyl) propyl methacrylate, 2-(trimethylsiloxy) ethyl methacrylate, bis(2-(methacryloyloxy)ethyl) phosphate, ethylene glycol methacrylate phosphate, 2-hydroxy-5-N-methacrylaminobenzoic acid, ethylene glycol dimethacrylate (EGDM), biphenyl diemethacrylate (BPDM), bisphenol A diemthacrylate (BisDMA), 1,6-hexanediol diemthacrylate (HDMA), tetraethylene glycol dimethacrylate, pyromellitic dianhydrate dimethacrylate, 1,10-decamethylene glycol dimethacrylate, bisphenol A glycerolate dimethacrylate, bisphenol A glycerolate diacrylate, 2,6-di-tert-butyl-4-methylphenol and combinations thereof. A selection of suitable oligomers and monomers is shown here:

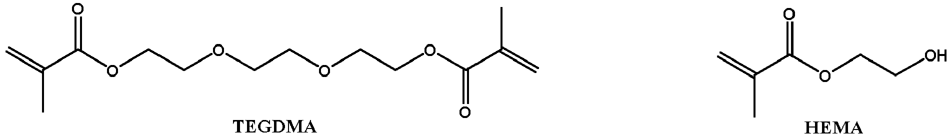

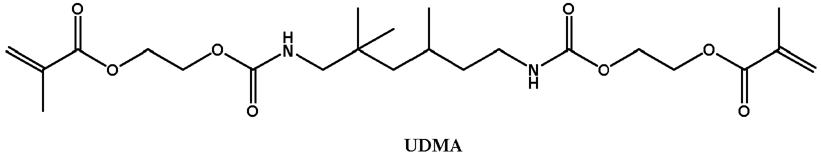

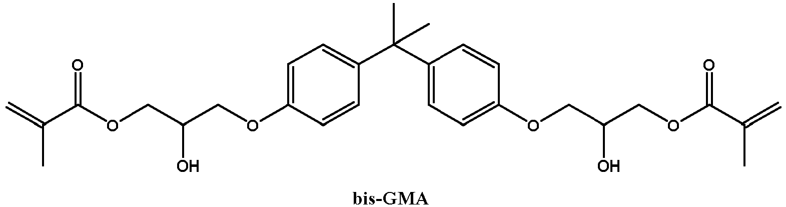

It may that the UV photoinitiator with absorption in the region 300 - 470 nm is present from 0.05-15 wt%. It may be that the total amount of photoinitiator present is between 0.5-5 wt%. The photoinitiator may be selected from: Anthraquinone, anthraquinone-2-sulfonic acid, (benzene) tricarbonyl chromium, benzyl, benzophenone, benzophenone / 1-hydroxycylohexyl phenyl ketone blends, 3,3',4,4'-benzoohenonetetracarboxylic acid dianhydride, 4-benzoylbisphenyl, 2-benzyl-2-(dimethylamino)-4'-morpholinobutyrophenone, 4,4'-bis(dimethylamino)benzophenone,, 2-chlorothioxanthen-9-one, dibenzosuberenone, 2,2'-diethoxyacetophenone, 4,4'-dihydroxybenzophenone, 4-(dimethylamino)benzophenone, 2,5-diemthylbenzophenone, diphenyl(2,4,6 trimethylbenzoyl) phosphine oxide / 2-hydroxy-2-methylpropiophenone blends, ethylanthraquinone, 3'-hydroxyacetophenone, 3-hydroxybenzophenone, 4-hydroxbenzophenone, thioxanthene-9-one, triarylsulfonium hexafluoroantimonate salts, triarylsulfonium hexafluorophosphate salts, methylbenzoylformate, 2-methyl-4'-(methylthio)-2-morpholinopropiophenone, 1-benzyl-2,N,N-dimethylamino-1-(4-morpholinophenyl)-1-butanone, phenanthrenequinone, 1,-hydroxy-cyclohexyl phenyl ketone, oxy-phenyl-acetic acid 2-[2 oxo-2-phenyl-acetoxy-ethoxy]-ethyl ester, diphenyl(2,4,6-trimethylbenzoyl) phosphine oxide, phenyl bis(2,4,6-trimethylbenzoyl) phosphine oxide, diphenyl[3-(phenylsulfanyl)phenyl] sulfanium hexafluorophosphate, diphenyl [2-(phenylsulfanyl)phenyl] sulfonium hexafluorophosphate. The UV photoinitiator may be a carbazole derivative and chosen from: 1,4-dimethyl-9H-carbazole-carbazole-9carbaldehyde, 1,4-dimethyl-9H-carbazole-3-carbaldehyde, 9-ethyl-1,4-dimethyl-9H-carbazole, N-(2,2-diethoxyethy)-N-[(1,4-dimethyl-9H-carbazol-3-yl)methyl]benzenesulfonamide, 2,2-diethoxy-N-[(9-ethyl-1,4-dimethyl-9H-carbazo1-3-yl)methyl]ethan-1-amine, 9-ethyl-1,4-dimethyl-9H-carbazole-3-carboxaldehyde, N-(2,2-diethoxyethyl)-N-[(9-ethyl-1,4-dimethyl-9H-carbazol-3-yl)methyl]-4-methyl-benzenesulfonamide.

It may be that the photoinitiator is camphorquinone in combination with a photobleaching agent. It may be that camphorquinone is present between 0.5 wt% - 10% wt. Photopolymer formulations with camphorquinone display a slight transparent yellow colour. In order to obtain a colourless transparent formulation, a photobleaching agent is required. The photobleaching agent may be added to the initial photopolymer formulation and dissolved in the photopolymer prior to formation of the 3D object. The 3D printed object is subsequently exposed to UV light with a wavelength of 290 - 420 nm until disappearance of the yellow colour occurs. The photobleaching agent may be selected from, but not limited to: bis(trifluoromethane)sufonimide lithium salt (LiTFSI), ethyl 4-(dimethylamino) benzoate (EDB), N-vinylcarbazole (NVK), 9H-carbazole-9-ethanol (NAI), diphenyl methanol, 9-ethylcarbazole, dibenzofuran, dibenzothiophene, 1-phenylmethanol, 4-isopropylbenzyl alcohol, triethyleneglycol divinylether and combinations thereof. In order to increase the accuracy of the 3D printed part and prevent over-curing effect caused by radical photopolymerisation processes when using UV light to harden photopolymer, radical stabilisers may be added to the photopolymer formulation. Radical stabilisers can be either light absorbers, which convert UV light into other energy sources, such as heat. Radical stabilisers can also be molecules with antioxidative properties, that can react with radicals and lead to radical-deactivation. Radical stabilisers are typically present in 0.01 wt%-0.3 wt%. Said radical stabilisers may be selected from: 2-hydroxyphenyl-benzophenones, 2-(2-hydroxyphenyl)-benztriazoles, 2-hydroxyphenyl-s-triazines, Irgastab UV10 , Tinuvin 1130, Tinuvin 1577 ED, Tinuvin 1600, Tinuvin 213, Tinuvin 234, Tinuvin 234 FF, Tinuvin 312, Tinuvin 326, Tinuvin 326 FL, Tinuvin 326 K, Tinuvin 329, Tinuvin 360, Tinuvin 360 ED, Tinuvin 384-2, Tinuvin 400, Tinuvin 400 DW, Tinuvin 460, Tinuvin 477, Tinuvin 479, Tinuvin 5050, Tinuvin 5060, Tinuvin 571, Tinuvin 900, Tinuvin 928, Tinuvin 99-2, Tinuvin B75, Tinuvin P, Tinuvin PA 123, Tinuvin PA 144, Tinuvin PA 328 FF and Tinuvin 328 from BASF, 1,2,2,6,6-pentamethyl-4-piperdiyl methacrylate, 2-hydroxy-4-n-octoxybenzophenone, 2(2'-hydroxy-5'-methylphenyl)benzotriazole, N,N'-dimethyl benzamine and combinations thereof.

The photopolymer formulation may further comprise a pigment or dye. Said pigment or dye can be organic, inorganic or a combination thereof.

Optionally, the 3D printed aligner may be coated using a clear, transparent, biocompatible and light sensitive, heat sensitive or two-component coating. The use of a light-sensitive coating on the 3D printed aligner leads to a more uniform surface finish and avoids leaching effects, including the leaching of formulation components, e.g. monomers, out of the 3D printed part and into the intra-oral space, or water or solvents from the intra-oral space into the 3D printed aligner. Said coating may be selected from, but not limited to: ComforCoat® (DSM), SlipSkin®, MediShield™, PC-Technology Coating ™, PlasmaPlus®, Endura 334, Endura 103, Endura 348, Endura 350-3, Endura 320M, Endura 334-B, TerraWet Gloss Coating G9/230, TerraWet Matt Coating G9/56M, TerraWet Gloss Coating G9/640, TerraWet Gloss Coating Matt G9/72, TerraWet Gloss Coating G9/425, TerraWet Special Coating G9/288 ZA2, TerraWet Gloss Coating G9/370, TerraWet Gloss Coating G378, TerraWet Gloss Coating G9/285, TerraWet Matt Coating G9/99, TerraWet Special Coating G9/221, TerraWet High Gloss Coating G9/666 N2, TerraWet Coating G9/115 silk, Terraflex -F Barrier Coating G11/119 VG, TerraWet Primer G9/601, Aquaprint 854 T, TerraWet Gloss Coating 9/704, TerraWet High Gloss Coating 9/794, TerraWet Primer G9/185, TerraWet Gloss Coating G9/706, Aquaprint 200, TerraWet Gloss Coating G9/445 SZ, TerraWet Special Coating, 09/585, TerraWet Barrier Coating 9/317, TerraWet Barrier Coating 9/428, TerraWet Barrier Coating 9/554, VerdeCoat™ and combinations thereof.

### DESCRIPTION OF THE DRAWINGS

Examples are further described hereinafter with reference to the accompanying drawings.

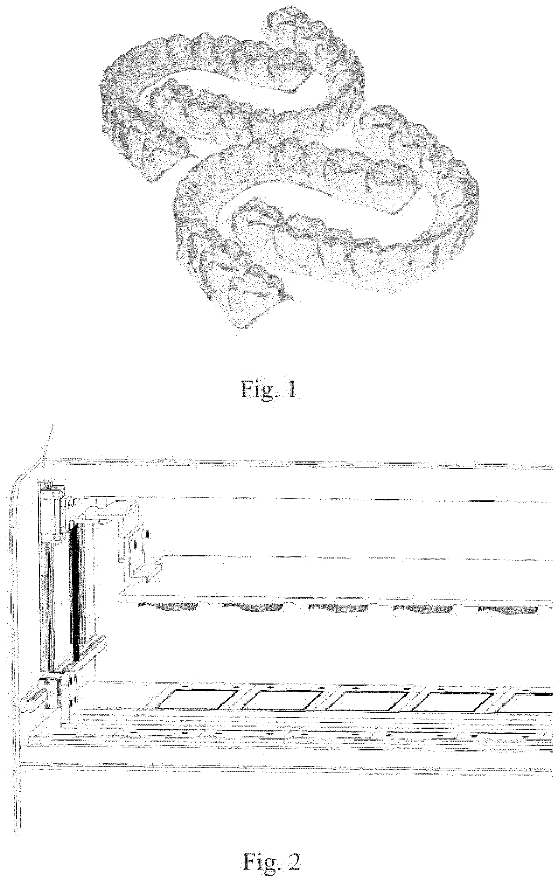

Fig. 1 shows a typical configuration to print four aligners orientated on the build plate to maximise space.
Fig. 2 shows a typical printer arrangement where the describes the 5.7" screens have been arranged in two lines of the visual display devices to create the aligners in the bottom up manner of printing.

### EXAMPLES

Each example was carried out in this manner unless otherwise described. The 3D test object printed in these examples was formed in a single printing process using a stereolithographic 3D printer comprising an LCD display screen illuminated by a near UV or blue light source. In the following examples the LCD screen used was a 5.7" 2160 x 3840 pixel LCD array in RGB format from BOE in Beijing, China with part number VS057QUM-NH2-62P0. It was back lit with a lensed LED array consisting of 38 x 3W LEDs with peak emission of 410 nm with each LED fitted with individual 12-degree angle of incidence collimating lenses on top of them. It is possible to use a UV light source with a peak wavelength of between 350 nm to 410 nm. The 3D printed aligner was formed in a single printing process using a stereolithographic 3D printer, comprising a visual display screen illuminated by 410 nm light. The supported aligner was formed on a build platform by sequential exposure of liquid photopolymer to light, in layers, interspersed by motion perpendicularly away from the light source. The test object of an aligner was created by forming the set of 140 layers with a layer thickness of 100 microns by exposure of the photopolymer mixture in the vat to light emitted from the LCD screen. The finished object was then raised out of the photopolymer vat, the resin attached to the surface of the aligner being allowed to drain back into the vat. This resin can be re-used for subsequent printing. The print platform with the aligner was then removed from the printer and rinsed with a suitable solvent, in this case isopropyl alcohol. The aligner was then post exposed with UV light. In some examples, the aligner was first coated with a biocompatible coating and subsequently post exposed with UV light. In some examples, the aligner was first post exposed with UV light and subsequently coated with a biocompatible coating.

### Example 1:

In this example 550 grams of the photopolymer formulation were prepared by mixing urethane dimethacrylate (UDMA, X850, Esschem) 30 wt%, triethylene glycol diemthacrylate (TEGDMA, Sigma Aldrich), 69.68 wt% and Tinuvin 477 (BASF), 0.02 wt% in a black plastic bottle. The reaction mixture was stirred for 60 minutes at room temperature until all the solid dissolved. Then, phenyl bis(2.4.6-trimethylbenzoyl) phosphine oxide (BAPO, Sigma Aldrich) was added and the reaction mixture was stirred for 120 minutes at room temperature, followed by 30 minutes of sonication. The 3D printed aligner was created using the setup described in the general example, allowing for the selective use of light with wavelengths below 460 nm. This wavelength was used in order to selectively induce the radical photopolymerisation. After completion of the 3D printing process, the finished aligner was removed from the platform, washed and post exposed under UV light for 120 minutes. A hard, clear, biocompatible and non-leachable aligner with the correct properties for teeth straightening was created.

### Example 2:

In this example 550 grams of the photopolymer formulation were prepared by mixing urethane dimethacrylate (UDMA, X850, Esschem) 30 wt%, triethylene glycol diemthacrylate (TEGDMA, Sigma Aldrich), 69.68 wt% and Tinuvin 477 (BASF), 0.02 wt% in a black plastic bottle. The reaction mixture was stirred for 60 minutes at room temperature until all the solid dissolved. Then, phenyl bis(2.4.6-trimethylbenzoyl) phosphine oxide (BAPO, Sigma Aldrich) was added and the reaction mixture was stirred for 120 minutes at room temperature, followed by 30 minutes of sonication. The aligner was created using the setup described beforehand, allowing for the selective use of light at 405 nm. This wavelength was used in order to selectively induce the radical photopolymerisation. After completion of the 3D printing process, the aligner was removed from the platform, washed with water and isopropanol and left to dry for 10 minutes at room temperature. Subsequently, the aligner was sprayed uniformly with TerraWet Gloss Coating 9/704 and post exposed under UV light for 120 minutes. The coating process was repeated three times. A hard, clear, biocompatible and non-leachable aligner with the correct properties for teeth straightening was created.

### Example 3:

In this example 750 grams of photopolymer formulation were prepared by mixing bisphenol A glycerolate dimethacrylate (bis-GMA, Sigma Aldrich), 33% wt,, triethylene glycol dimethacrylate (TEGDMA, Sigma Aldrich) and 37 wt%, isobornyl methacrylate (Sigma Aldrich), 29.75 wt% in a black plastic bottle. The clear reaction mixture was stirred for 30 minutes at room temperature. Then, phenyl bis(2,4,6-trimethylbenzoyl) phosphine oxide 0.25 wt% was added and the reaction mixture was sonicated for 60 minutes until all solids dissolved. The 3D printed mouthguard in this example was created using the setup described beforehand, allowing for the selective use of UV light with a wavelength of 385 nm. This wavelength was used in order to selectively induce the radical photopolymerisation. After completion of the 3D printing process, the mouthguard was removed from the platform, washed and post exposed under UV light for 120 minutes. A hard, clear, biocompatible mouthguard with the correct properties for teeth protection was created.

### Example 4:

In this example 750 grams of photopolymer formulation were prepared by mixing bisphenol A glycerolate dimethacrylate (bis-GMA, Sigma Aldrich), 33% wt, triethylene glycol dimethacrylate (TEGDMA, Sigma Aldrich) and 37 wt%, isobornyl methacrylate (Sigma Aldrich), 29.75 wt% in a black plastic bottle. The clear reaction mixture was stirred for 30 minutes at room temperature. Then, phenyl bis(2,4,6-trimethylbenzoyl) phosphine oxide 0.25 wt% were added and the reaction mixture was sonicated for 60 minutes until all solids dissolved. The 3D aligner was created using the setup described beforehand, allowing for the selective use of light with wavelength of 410nm. This wavelength was used in order to selectively induce the radical photopolymerisation. After printing was completed the finished aligner was removed from the platform, washed with water and isopropanol and left to dry for 10 minutes at room temperature. Subsequently, the aligner was dipped into a vat with TerraWet Gloss G9/285 and post exposed under UV light at 80°C for 120 minutes. A hard, clear, biocompatible and non-leachable aligner with the correct properties for teeth straightening was created.

### Example 5:

In this example 750 grams of photopolymer formulation were prepared by mixing bisphenol A glycerolate dimethacrylate (bis-GMA, Sigma Aldrich), 33% wt,, triethylene glycol dimethacrylate (TEGDMA, Sigma Aldrich) and 37 wt%, isobornyl methacrylate (Sigma Aldrich), 29.75 wt% in a black plastic bottle. The clear reaction mixture was stirred for 30 minutes at room temperature. Then, phenyl bis(2,4,6-trimethylbenzoyl) phosphine oxide 0.25 wt% were added and the reaction mixture was sonicated for 60 minutes until all solids dissolved. The 3D mouthguard was created using the setup described beforehand, allowing for the selective use of light with wavelengths of 410 nm. This wavelength was used in order to selectively induce the radical photopolymerisation. After completion of the 3D printing process, the finished mouthguard was removed from the platform, washed with water and isopropanol and left to dry for 10 minutes at room temperature. Subsequently a design was inkjet printed onto the front surface of the mouthguard and the mouthguard was dipped into a vat with TerraWet Matt G9/72 in. It was then post exposed under UV light at 80°C for 120 minutes. A hard, clear, biocompatible and non-leachable mouthguard with a design printed on the front and the correct properties for teeth protection was created.

### Example 6:

In this example 660 grams of photopolymer formulation were prepared by mixing bisphenol A glycerolate dimethacrylate (bis-GMA, Sigma Aldrich) 15wt%, bisphenol A dimethacrylate (BPDM, Sigma Aldrich), 20%wt, trithylene glycol diemthacrylate (TEGDMA, Sigma Aldrich), 34.49 wt% and 2-hydroxyethyl methacrylate (HEMA, Sigma Aldrich), 30 wt% in a black plastic bottle. The clear reaction mixture was mixed for 30 minutes at room temperature. Then, diphenyl(2,4,6-trimethylbenzoyl) phosphine oxide (TPO, Sigma Aldrich), 0.5 wt% and Tinuvin 477 (BASF), 0.01 wt% were added and the reaction mixture was stirred for 120 minutes at room temperature and subsequently heated to 60°C for 18 hours with occasional stirring. The 3D printed aligner was created using the setup described previously, allowing for the selective use of light with wavelength peaking at 410 nm. This wavelength was used in order to selectively induce the radical photopolymerisation. After completion of the 3D printing process, the aligner was removed from the platform, washed and post exposed under UV light for 120 minutes. A hard, clear, biocompatible and non-leachable aligner with the correct properties for teeth straightening was created.

### Example 7:

In this example 660 grams of photopolymer formulation were prepared by mixing bisphenol A glycerolate dimethacrylate (bis-GMA, Sigma Aldrich) 15wt%, bisphenol A dimethacrylate (BPDM, Sigma Aldrich), 20%wt, trithylene glycol diemthacrylate (TEGDMA, Sigma Aldrich), 34.49 wt% and 2-hydroxyethyl methacrylate (HEMA, Sigma Aldrich), 30 wt% in a black plastic bottle. The clear reaction mixture was mixed for 30 minutes at room temperature. Then, diphenyl(2,4,6-trimethylbenzoyl) phosphine oxide (TPO, Sigma Aldrich), 0.5 wt% and Tinuvin 477 (BASF), 0.01 wt% were added and the reaction mixture was stirred for 120 minutes at room temperature and subsequently heated to 60°C for 18 hours with occasional stirring. The 3D aligner was created using the setup described beforehand, allowing for the selective use of light with wavelengths below 410 nm. This wavelength was used in order to selectively induce the radical photopolymerisation. After completion of the 3D printing process, the finished aligner was removed from the platform, washed with water and isopropanol and left to dry for 10 minutes at room temperature. Subsequently, the aligner was sprayed uniformly with VerdeCoat® and post exposed under UV light at 80°C for 120 minutes. The coating process was repeated 3 times and a hard, clear, biocompatible and non-leachable aligner with the correct properties for teeth straightening was created.

### Example 8:

In this example 800 grams of photopolymer formulation were prepared by mixing bisphenol A dimethacrylate (BPDM, Sigma Aldrich), urethane diemthacrylate (UDMA, X850, Esschem), 20 wt% and 2-hydroxyethyl methacrylate (HEMA, Sigma Aldrich), 59.58 wt% in a black plastic bottle. The reaction mixture was mixed for 30 minutes at room temperature. Then, diphenyl(2,4,6-trimethylbenzoyl) phosphine oxide (TPO, Sigma Aldrich), 0.4 wt% and Tinuvin 329 (BASF), 0.02 wt% were added and the reaction mixture was stirred for 120 minutes at room temperature and subsequently heated to 60°C for 18 hours with occasional stirring. The 3D printed aligner was created using the setup described beforehand, allowing for the selective use of light with wavelength of 410 nm. This wavelength was used in order to selectively induce the radical photopolymerisation. After completion of the 3D printing process, the finished aligner was removed from the platform, washed and post exposed under UV light for 120 minutes. A hard, clear, biocompatible and non-leachable aligner with the correct properties for teeth straightening was created.

### Example 9:

In this example 800 grams of photopolymer formulation were prepared by mixing bisphenol A dimethacrylate (BPDM, Sigma Aldrich), urethane diemthacrylate (UDMA, X850, Esschem), 20 wt% and 2-hydroxyethyl methacrylate (HEMA, Sigma Aldrich), 59.58 wt% in a black plastic bottle. The reaction mixture was mixed for 30 minutes at room temperature. Then, diphenyl(2,4,6-trimethylbenzoyl) phosphine oxide (TPO, Sigma Aldrich), 0.4 wt% and Tinuvin 329 (BASF), 0.02 wt% were added and the reaction mixture was stirred for 120 minutes at room temperature and subsequently heated to 60°C for 18 hours with occasional stirring. The 3D printed aligner was created using the setup described previously, allowing for the selective use of light with wavelengths of 410 nm. This wavelength was used in order to selectively induce the radical photopolymerisation. After completion of the 3D printing process, the finished aligner was removed from the platform, washed with water and isopropanol and left to dry for 10 minutes at room temperature. Subsequently, the aligner was sprayed uniformly with VerdeCoat® and post exposed under UV light at 80°C for 120 minutes. A hard, clear, biocompatible and non-leachable aligner with the correct properties for teeth straightening was created.

### Example 10:

In this example 800 grams of photopolymer formulation were prepared by mixing bisphenol A dimethacrylate (BPDM, Sigma Aldrich), urethane diemthacrylate (UDMA, X850, Esschem), 20 wt% and 2-hydroxyethyl methacrylate (HEMA, Sigma Aldrich), 59.58 wt% in a black plastic bottle. The reaction mixture was mixed for 30 minutes at room temperature. Then, diphenyl(2,4,6-trimethylbenzoyl) phosphine oxide (TPO, Sigma Aldrich), 0.4 wt% and Tinuvin 329 (BASF), 0.02 wt% were added and the reaction mixture was stirred for 120 minutes at room temperature and subsequently heated to 60°C for 18 hours with occasional stirring. The 3D printed aligner was created using the setup described beforehand, allowing for the selective use of light with wavelength of 410 nm. This wavelength was used in order to selectively induce the radical photopolymerisation. After completion of the 3D printing process, the finished aligner was removed from the platform, washed with water and isopropanol and left to dry for 10 minutes at room temperature. Subsequently, the aligner was dipped into a vat with ComfortCoat® and post exposed under UV light at 80°C for 120 minutes. A hard, clear, biocompatible and non-leachable aligner with the correct properties for teeth straightening was created.

### Example 11:

In this example 760 grams of photopolymer formulation were prepared by mixing urethane dimethacrylate (UDMA, X850, Esschem), 20 wt%, 1,6-hexanediol dimethacrylate (HDMA, Sigma Aldrich), 32 wt%, bisphenol A glycerolate dimethacrylate (bis-GMA, Sigma Aldrich), 12.28 wt% and isobornyl methacrylate (Sigma Aldrich), 35 wt% in a black plastic bottle. The clear reaction mixture was stirred for 30 minutes at room temperature. Then, phenyl (2,4,6-trimethylbenzoyl) phosphine oxide (BAPO, Sigma Aldrich), 0.5 wt% and Tinuvin 326 K (BASF), 0.02 wt% were added and the reaction mixture was sonicated for 30 minutes, then it was heated to 60°C for 18 hours with occasional stirring until all solids dissolved. The 3D printed aligner was created using the setup described beforehand, allowing for the selective use of light with wavelength of 410 nm. This wavelength was used in order to selectively induce the radical photopolymerisation. After completion of the 3D printing process, the finished object was removed from the platform, washed and post exposed under UV light for 120 minutes. A hard, clear, biocompatible and non-leachable aligner with the correct properties for teeth straightening was created.

### Example 12:

In this example 760 grams of photopolymer formulation were prepared by mixing urethane dimethacrylate (UDMA, X850, Esschem), 20 wt%, 1,6-hexanediol dimethacrylate (HDMA, Sigma Aldrich), 32 wt%, bisphenol A glycerolate dimethacrylate (bis-GMA, Sigma Aldrich), 12.28 wt% and isobornyl methacrylate (Sigma Aldrich), 35 wt% in a black plastic bottle. The clear reaction mixture was stirred for 30 minutes at room temperature. Then, phenyl (2,4,6-trimethylbenzoyl) phosphine oxide (BAPO, Sigma Aldrich), 0.5 wt% and Tinuvin 326 K (BASF), 0.02 wt% were added and the reaction mixture was sonicated for 30 minutes, then heated to 60°C for 18 hours with occasional stirring until all solids dissolved. The 3D printed aligner was created using the setup described beforehand, allowing for the selective use of light with wavelength of 410 nm. This wavelength was used in order to selectively induce the radical photopolymerisation. After completion of the 3D printing process, the finished aligner was removed from the platform, washed with water and isopropanol and left to dry for 10 minutes at room temperature. Subsequently, the aligner was dipped into a vat with TerraWet Gloss G9/378 and post exposed under UV light at 80°C for 120 minutes. A hard, clear, biocompatible and non-leachable aligner with the correct properties for teeth straightening was created.

### Example 13:

In this example 760 grams of photopolymer formulation were prepared by mixing urethane dimethacrylate (UDMA, X850, Esschem), 20 wt%, 1,6-hexanediol dimethacrylate (HDMA, Sigma Aldrich), 32 wt%, bisphenol A glycerolate dimethacrylate (bis-GMA, Sigma Aldrich), 12.28 wt% and isobornyl methacrylate (Sigma Aldrich), 35 wt% in a black plastic bottle. The clear reaction mixture was stirred for 30 minutes at room temperature. Then, phenyl (2,4,6-trimethylbenzoyl) phosphine oxide (BAPO, Sigma Aldrich), 0.5 wt% and Tinuvin 326 K (BASF), 0.02 wt% were added and the reaction mixture was sonicated for 30 minutes, then heated to 60°C for 18 hours with occasional stirring until all solids dissolved. The 3D printed aligner was created using the setup described beforehand, allowing for the selective use of light with wavelength of 410 nm. This wavelength was used in order to selectively induce the radical photopolymerisation. After completion of the 3D printing process, the finished aligner was removed from the platform, washed with water and isopropanol and left to dry for 10 minutes at room temperature. Subsequently, the aligner was sprayed uniformly with VerdeCoat® and post exposed under UV light at 80°C for 120 minutes. The coating process was repeated 2 times. A hard, clear, biocompatible and non-leachable aligner with the correct properties for teeth straightening was created.

### Example 14:

In this example 550 grams of photopolymer formulation were prepared by mixing bisphenol A diemthacrylate (bis-DMA, Sigma Aldrich), 21 wt%, urethane dimethacrylate (UDMA, X850, Esschem), 15 wt% and 2-hydroxyethyl methacrylate (HEMA, Sigma Aldrich), 62 wt% were mixed in a black plastic bottle. The clear reaction mixture was stirred for 30 minutes at room temperature. Then, camphorquinone (CQ, Sigma Aldrich), 1.5 wt% and bis(trifluoromethane)sulfonimide lithium salt (Sigma Aldrich), 0.5 wt% were added to the reaction mixture and the slight yellow reaction mixture was stirred for 120 minutes at room temperature and subsequently heated to 60°C for 18 hours with occasional stirring until all solids dissolved. The 3D printed aligner was created using the setup described beforehand, allowing for the selective use of light with wavelength of 410 nm. This wavelength was used in order to selectively induce the radical photopolymerisation. After completion of the 3D printing process, the finished aligner was removed from the platform, washed and post exposed under UV light for 180 minutes until post photopolymerisation was complete. A hard, clear, biocompatible and non-leachable aligner with the correct properties for teeth straightening was created.

### Example 15:

In this example 550 grams of photopolymer formulation were prepared by mixing bisphenol A diemthacrylate (bis-DMA, Sigma Aldrich), 21 wt%, urethane dimethacrylate (UDMA, X850, Esschem), 15 wt% and 2-hydroxyethyl methacrylate (HEMA, Sigma Aldrich), 62 wt% were mixed in a black plastic bottle. The clear reaction mixture was stirred for 30 minutes at room temperature. Then, camphorquinone (CQ, Sigma Aldrich), 1.5 wt% and bis(trifluoromethane)sulfonimide lithium salt (Sigma Aldrich), 0.5 wt% were added to the reaction mixture and the slight yellow reaction mixture was stirred for 120 minutes at room temperature and subsequently heated to 60°C for 18 hours with occasional stirring until all solids dissolved. The 3D printed aligner was created using the setup described beforehand, allowing for the selective use of light with wavelength of 410 nm. This wavelength was used in order to selectively induce the radical photopolymerisation. After completion of the 3D printing process, the finished aligner was removed from the platform, washed with water and isopropanol and left to dry for 10 minutes at room temperature. Subsequently, the aligner was sprayed uniformly with TerraWet Glodd G9/425 and post exposed under UV light at 80°C for 180 minutes. The coating process delivered a hard, clear, biocompatible and non-leachable aligner with the correct properties for teeth straightening.

### Example 16:

In this example 550 grams of photopolymer formulation were prepared by mixing bisphenol A diemthacrylate (bis-DMA, Sigma Aldrich), 21 wt%, urethane dimethacrylate (UDMA, X850, Esschem), 15 wt% and 2-hydroxyethyl methacrylate (HEMA, Sigma Aldrich), 62 wt% were mixed in a black plastic bottle. The clear reaction mixture was stirred for 30 minutes at room temperature. Then camphorquinone (CQ, Sigma Aldrich), 1.5 wt% and bis(trifluoromethane)sulfonimide lithium salt (Sigma Aldrich), 0.5 wt% were added to the reaction mixture and the slight yellow reaction mixture was stirred for 120 minutes at room temperature and subsequently heated to 60°C for 18 hours with occasional stirring until all solids dissolved. The 3D printed aligner was created using the setup described beforehand, allowing for the selective use of light with wavelength of 410 nm. This wavelength was used in order to selectively induce the radical photopolymerisation. After completion of the 3D printing process, the finished object was removed from the platform, washed with water and isopropanol and left to dry for 10 minutes at room temperature. Subsequently, the object was dipped into a vat with MediShield® and post exposed under UV light at 80°C for 180 minutes until a clear aligner was obtained. A hard, clear, biocompatible and non-leachable aligner with the correct properties for teeth straightening was created.

## Claims

1. A method for manufacturing a plurality of dental aligners or mouthguards from liquid photopolymer, the method comprising:
providing digital representations defining layers of a plurality of dental aligners or mouthguards to be manufactured;
sequentially exposing liquid photopolymer to light emitted by a visual display screen or a plurality of visual display screens, thereby forming layers of the plurality of cured polymer aligners or mouthguards simultaneously, wherein the photopolymer contains a visible light or UV light photoinitiator.

2. A method of claim 1, wherein the method comprises exposing liquid photopolymer to light emitted by a plurality of visual display screens.

3. A method of claim 2, wherein the plurality of visual display screens are laid out in the same horizontal plane.

4. A method of any preceding claim, wherein the or each visual display screen is a Liquid Crystal Display (LCD), Light emitting Diode (LED), Electronic paper (E Ink), Electroluminescent display (ELD), Plasma Display Panel (PDP) or Organic Light-emitting Diode Display (OLED).

5. A method of claim 4, wherein the or each visual display screen is a liquid crystal display (LCD) screen.

6. A method of claim 5, wherein the liquid crystal display screen is a monochrome LCD screen.

7. A method of any preceding claim, wherein the or each visual display screen has 250 pixels per inch or greater.

8. A method of claim 1, wherein the digital representation is formed by digitally sectioning a three-dimensional computer-aided design (CAD) image into layers, typically of equal thicknesses.

9. A method of claim 1, wherein each layer of a cured polymer varies from the corresponding digital representation by less than 150 microns.

10. A method of any preceding claim, wherein after a 3D printing process, the aligners or mouthguards are coated with a reactive compound that is safe for use in the mouth.

11. A method of any preceding claim, wherein the liquid photopolymer comprises:
at least one monomeric or oligomeric chemical species comprising at least one carbon-carbon double bond that is polymerisable by free radical polymerisation being present at a total amount of 10-98 wt %;
at least one photoinitiator that absorbs UV, or blue light in the region between 350 nm and 460 nm present at a total amount of 0.1-10 wt %.

12. A method of any preceding claim, wherein the method is carried out on a stereolithographic 3D printer, wherein the 3D printer comprises:
a visual display screen or a plurality of visual display screens laid out in the same horizonal plane; and
wherein a single build platform is in a plane parallel to and aligned with the visual display screen or plurality of visual display screens.

13. A method of any one of claims 1 to 11, wherein the method is carried out on a stereolithographic 3D printer comprising a plurality of build platforms and also comprising the following stations:
an exposure station comprising a vat and the visual display screen or a plurality of visual display screens, said vat and said visual display screen or screens being in the same vertical plane, said exposure station being configured such that liquid photopolymer situated in the vat and between the build platform or platforms and the visual display screen or screens is exposed to a series of images on the visual display screen or screens, each image being a cross-section of the plurality of dental aligners or mouthguards, partially curing the liquid photopolymer to form a plurality of intermediate objects on the build platform;
a wash station configured to remove unpolymerised photopolymer from the intermediate objects with a solution;
a post exposure station comprising an illumination source of a wavelength configured to polymerise the partially cured photopolymer of the intermediate objects to form uncoated dental aligners or mouthguards; and
a load and unload station to remove the dental aligners or mouthguards from the build platform.
wherein said build platforms are configured to move from station to station and wherein said stations are configured to carry out their functions simultaneously, each operating at any given time on a different build platform or the object on said different build platform.

14. A method of claim 13, wherein the stereolithographic 3D printer further comprises a station to spray or coat the surface of the uncoated dental aligners or mouthguards with a reactive material that is safe for use in the mouth.

15. A method of any preceding claim, wherein the plurality of dental aligners are a set intended for use with the same patient, each aligner being for use at a different stage of their treatment.

## Patentansprüche

1. Verfahren zum Fertigen von mehreren Zahnschienen oder eines Mundschutzes aus flüssigem Photopolymer, wobei das Verfahren umfasst:
Bereitstellen digitaler Darstellungen, die Schichten mehrerer Zahnschienen oder eines Mundschutzes, die/der gefertigt werden soll, definieren;
sequenzielles Aussetzen von flüssigem Photopolymer an Licht, das von einem visuellen Anzeigebildschirm oder mehreren visuellen Anzeigebildschirmen emittiert wird, wobei dadurch gleichzeitig Schichten der mehreren gehärteten Polymerschienen oder des gehärteten Mundschutzes ausgebildet werden, wobei das Photopolymer einen Photoinitiator für sichtbares Licht oder UV-Licht enthält.

2. Verfahren nach Anspruch 1, wobei das Verfahren das Aussetzen von flüssigem Photopolymer an Licht umfasst, das von mehreren visuellen Anzeigebildschirmen emittiert wird.

3. Verfahren nach Anspruch 2, wobei die mehreren visuellen Anzeigebildschirme in derselben horizontalen Ebene angeordnet sind.

4. Verfahren nach einem vorhergehenden Anspruch, wobei der oder jeder visuelle Anzeigebildschirm eine Flüssigkristallanzeige (LCD), eine Leuchtdiode (LED), ein elektronisches Papier (E Ink), eine Elektrolumineszenzanzeige (ELD), ein Plasmaanzeigefeld (PDP) oder eine organische Leuchtdiodenanzeige (OLED) ist.

5. Verfahren nach Anspruch 4, wobei der oder jeder visuelle Anzeigebildschirm ein Flüssigkristallanzeige- (LCD-) Bildschirm ist.

6. Verfahren nach Anspruch 5, wobei der Flüssigkristallanzeigebildschirm ein monochromer LCD-Bildschirm ist.

7. Verfahren nach einem vorhergehenden Anspruch, wobei der oder jeder visuelle Anzeigebildschirm 250 Pixel pro Zoll oder mehr aufweist.

8. Verfahren nach Anspruch 1, wobei die digitale Darstellung durch digitales Unterteilen eines dreidimensionalen computerunterstützten Entwurfs- (CAD-) Bildes in Schichten von typischerweise gleichen Dicken ausgebildet wird.

9. Verfahren nach Anspruch 1, wobei jede Schicht eines gehärteten Polymers von der entsprechenden digitalen Darstellung um weniger als 150 Mikrometer abweicht.

10. Verfahren nach einem vorhergehenden Anspruch, wobei die Schienen oder der Mundschutz nach einem 3D-Druckvorgang mit einer reaktiven Verbindung beschichtet werden, die für die Verwendung im Mund sicher ist.

11. Verfahren nach einem vorhergehenden Anspruch, wobei das flüssige Photopolymer umfasst:
wenigstens eine monomere oder oligomere chemische Spezies, die wenigstens eine Kohlenstoff-Kohlenstoff-Doppelbindung umfasst, die durch freie radikale Polymerisation polymerisierbar ist, die in einer Gesamtmenge von 10-98 Gew.-% vorhanden ist;
wenigstens einen Photoinitiator, der UV- oder blaues Licht in dem Bereich zwischen 350 nm und 460 nm absorbiert, der in einer Gesamtmenge von 0,1-10 Gew.-% vorhanden ist.

12. Verfahren nach einem vorhergehenden Anspruch, wobei das Verfahren auf einem stereolithographischen 3D-Drucker ausgeführt wird, wobei der 3D-Drucker umfasst:
einen visuellen Anzeigebildschirm oder mehrere visuelle Anzeigebildschirme, die in derselben horizontalen Ebene angeordnet sind; und
wobei sich eine einzelne Bauplattform in einer Ebene parallel zu dem visuellen Anzeigebildschirm oder den mehreren visuellen Anzeigebildschirmen befindet und an diesem/diesen ausgerichtet ist.

13. Verfahren nach einem der Ansprüche 1 bis 11, wobei das Verfahren auf einem stereolithographischen 3D-Drucker ausgeführt wird, der mehrere Bauplattformen umfasst und ebenso die folgenden Stationen umfasst:
eine Aussetzungsstation, die eine Mulde und den visuellen Anzeigebildschirm oder mehrere visuelle Anzeigebildschirme umfasst, wobei sich die Mulde und der visuelle Anzeigebildschirm oder die visuellen Anzeigebildschirme in derselben vertikalen Ebene befinden, wobei die Aussetzungsstation derart konfiguriert ist, dass flüssiges Photopolymer in der Mulde und zwischen der Bauplattform oder den -plattformen angeordnet ist und der visuelle Anzeigebildschirm oder die visuellen Anzeigebildschirme einer Reihe von Bildern auf dem visuellen Anzeigebildschirm oder den visuellen Anzeigebildschirmen ausgesetzt wird/werden, wobei jedes Bild ein Querschnitt der mehreren Zahnschienen oder des Mundschutzes ist, wobei das flüssige Photopolymer teilweise gehärtet wird, um mehrere Zwischenobjekte auf der Bauplattform auszubilden;
eine Waschstation, die konfiguriert ist, um unpolymerisiertes Photopolymer mit einer Lösung von den Zwischenobjekten zu entfernen;
eine Nachaussetzungsstation, die eine Beleuchtungsquelle mit einer Wellenlänge umfasst, die konfiguriert ist, um das teilweise gehärtete Photopolymer der Zwischenobjekte zu polymerisieren, um unbeschichtete Zahnschienen oder einen unbeschichteten Mundschutz auszubilden; und
eine Lade- und Entladestation, um die Zahnschienen oder den Mundschutz von der Bauplattform zu entfernen
wobei die Bauplattformen konfiguriert sind, um sich von Station zu Station zu bewegen, und wobei die Stationen konfiguriert sind, um ihre Funktionen gleichzeitig auszuführen, wobei jede zu einem gegebenen Zeitpunkt auf einer anderen Bauplattform oder an dem Objekt auf der anderen Bauplattform arbeitet.

14. Verfahren nach Anspruch 13, wobei der stereolithografische 3D-Drucker ferner eine Station umfasst, um die Oberfläche der unbeschichteten Zahnschienen oder des Mundschutzes mit einem reaktiven Material zu besprühen oder zu beschichten, das für die Verwendung im Mund sicher ist.

15. Verfahren nach einem der vorhergehenden Ansprüche, wobei die mehreren Zahnschienen ein Satz sind, der für die Verwendung bei demselben Patienten bestimmt ist, wobei jede Zahnschiene für die Verwendung in einem anderen Stadium ihrer Behandlung ist.

## Revendications

1. Procédé de fabrication d'une pluralité d'aligneurs dentaires ou de protège-dents à partir d'un photopolymère liquide, le procédé comprenant :
la production de représentations numériques définissant des couches d'une pluralité d'aligneurs dentaires ou de protège-dents à fabriquer ;
l'exposition séquentielle d'un photopolymère liquide à une lumière émise par un écran d'affichage visuel ou une pluralité d'écrans d'affichage visuel, formant ainsi simultanément des couches de la pluralité d'aligneurs ou de protège-dents en polymère durci, ledit photopolymère contenant un photoinitiateur en lumière visible ou en lumière UV.

2. Procédé selon la revendication 1, ledit procédé comprenant l'exposition d'un photopolymère liquide à une lumière émise par une pluralité d'écrans d'affichage visuel.

3. Procédé selon la revendication 2, ladite pluralité d'écrans d'affichage visuel étant disposés dans le même plan horizontal.

4. Procédé selon l'une quelconque des revendications précédentes, ledit ou chaque écran d'affichage visuel étant un écran d'affichage à cristaux liquides (LCD), une diode électroluminescente (DEL), un papier électronique (E Ink), un écran électroluminescent (ELD), un écran plasma (PDP) ou un écran à diodes électroluminescentes organiques (OLED).

5. Procédé selon la revendication 4, ledit ou chaque écran d'affichage visuel étant un écran d'affichage à cristaux liquides (LCD).

6. Procédé selon la revendication 5, ledit écran d'affichage à cristaux liquides étant un écran LCD monochrome.

7. Procédé selon l'une quelconque des revendications précédentes, ledit ou chaque écran d'affichage visuel comportant 250 pixels par pouce ou plus.

8. Procédé selon la revendication 1, ladite représentation numérique étant formée par sectionnement numérique d'une image tridimensionnelle de conception assistée par ordinateur (CAD) en couches, généralement d'épaisseurs égales.

9. Procédé selon la revendication 1, chaque couche de polymère durci variant par rapport à la représentation numérique correspondante de moins de 150 microns.

10. Procédé selon l'une quelconque des revendications précédentes, après le processus d'impression 3D lesdits aligneurs ou lesdits protège-dents étant enduits d'un composé réactif qui est sans danger pour une utilisation dans la bouche.

11. Procédé selon l'une quelconque des revendications précédentes, ledit photopolymère liquide comprenant :
au moins une espèce chimique monomère ou oligomère comprenant au moins une double liaison carbone-carbone qui est polymérisable par polymérisation par radicaux libres qui est présente en une quantité totale de 10 à 98 % en poids ;
au moins un photoinitiateur qui absorbe les UV ou la lumière bleue dans la zone comprise entre 350 nm et 460 nm présent en une quantité totale de 0,1 à 10 % en poids.

12. Procédé selon l'une quelconque des revendications précédentes, ledit procédé étant effectué sur une imprimante 3D stéréolithographique, ladite imprimante 3D comprenant :
un écran d'affichage visuel ou une pluralité d'écrans d'affichage visuel disposés dans le même plan horizontal ; et
ladite plateforme de construction unique se trouvant dans un plan parallèle à ou aligné avec l'écran d'affichage visuel ou la pluralité d'écrans d'affichage visuel.

13. Procédé selon l'une quelconque des revendications 1 à 11, ledit procédé étant effectué sur une imprimante 3D stéréolithographique comprenant une pluralité de plateformes de construction et comprenant également les postes suivants :
un poste d'exposition comprenant une cuve et l'écran d'affichage visuel ou une pluralité d'écrans d'affichage visuel, ladite cuve et ledit écran ou lesdits écrans d'affichage visuel se trouvant dans le même plan vertical, ledit poste d'exposition étant conçu de sorte qu'un photopolymère liquide se trouvant dans la cuve et entre la plateforme ou les plateformes de construction et l'écran ou les écrans d'affichage visuel soit exposé à une série d'images sur l'écran ou les écrans d'affichage visuel, chaque image représentant une section transversale de la pluralité d'aligneurs dentaires ou de protège-dents, durcissant partiellement le photopolymère liquide pour former une pluralité d'objets intermédiaires sur la plateforme de construction ;
un poste de lavage conçu pour enlever le photopolymère non polymérisé des objets intermédiaires avec une solution ;
un poste post-exposition comprenant une source d'éclairage d'une longueur d'onde configurée pour polymériser le photopolymère partiellement durci des objets intermédiaires pour former des aligneurs dentaires ou des protège-dents non enduits ; et
un poste de chargement et déchargement pour enlever les aligneurs dentaires ou les protège-dents de la plateforme de construction,
lesdites plateformes de construction étant conçues pour se déplacer de poste en poste et lesdits postes étant conçus pour remplir simultanément leurs fonctions, chacun opérant à un quelconque moment donné sur une plateforme de construction différente ou l'objet sur ladite plateforme de construction différente.

14. Procédé selon la revendication 13, ladite imprimante 3D stéréolithographique comprenant un poste pour pulvériser ou enduire la surface des aligneurs dentaires ou des protège-dents non enduits avec un matériau réactif qui est sans danger pour une utilisation dans la bouche.

15. Procédé selon l'une quelconque des revendications précédentes, ladite pluralité d'aligneurs dentaires étant un ensemble destiné à être utilisé avec le même patient, chaque aligneur étant destiné à être utilisé à un stade différent de son traitement.
